# EUROPÄISCHE PATENTSCHRIFT

(11) **EP 0 658 528 B1**
(45) Veröffentlichungstag und Bekanntmachung des Hinweises auf die Patenterteilung: **19.05.1999**
(21) Anmeldenummer: 94119826.9
(22) Anmeldetag: 15.12.1994
(51) Int. Cl.: C04B 28/26, C04B 41/45

(54) **Faserfreie, wärmedämmende Verbundplatte**
Fiber-free insulating composite board
Panneau composé exempt de fibres, d'isolation thermique

(30) Priorität: 16.12.1993 DE 4343056
(43) Veröffentlichungstag der Anmeldung: 21.06.1995
(73) Patentinhaber: Wacker-Chemie GmbH, 81737 München (DE)
(72) Erfinder: Eyhorn, Thomas, D-87452 Altusried (DE); Kratel, Günter, Dr., D-87471 Durach (DE); Mauer, Ricardo, D-87463 Dietmannsried (DE); Schreyer, Thomas, D-87700 Memmingen (DE); Stohr, Günter, Dr., D-87471 Durach (DE)

(56) Entgegenhaltungen:
- EP-A- 0 562 554
- WO-A-93/17978
- DE-A- 3 700 478

## Beschreibung

Die Erfindung betrifft eine faserfreie, wärmedämmende Verbundplatte und deren Verwendung als Hochtemperatur-Wärmedämmstoff.

Wärmeisolierende Verbundplatten, die sich als Hochtemperatur-Wärmedämmstoffe eignen, sind bereits bekannt. Beispielsweise ist in der deutschen Offenlegungsschrift DE-3700478 A1 ein aus drei Schichten zusammengesetzter, wärmeisolierender Festformkörper offenbart. Die beiden Außenschichten bestehen hauptsächlich aus Vermiculit und schließen als dritte Schicht einen Füllkörper aus Perlit ein, dessen Wärmeisolationswert höher ist, als der von Vermiculit. Da Vermiculit Wärme nur bedingt isolieren kann, sind insbesondere bei Hochtemperatur-Anwendungen zum Erzielen einer effektiven Wärmedämmung große plattendicken notwendig.

Eine mehrteilige wärmedämmende Isolierplatte ist aus der Europäischen Patentanmeldung EP-530933 A1 bekannt. Diese Isolierplatte besteht aus einer schüsselförmigen Hohlschale aus Vermiculit zur Aufnahme eines isolierenden Werkstoffes und aus einer deckelartigen, auf die Hohlschale aufsetzbaren und ebenfalls aus Vermiculit bestehenden Abdeckschale. Auch bei dieser Isolierplatte ist der Platzbedarf sehr groß, wenn eine effektive Wärmeisolierung erzielt werden soll. Dies ist umso problematischer, als diese Platte als Dämmstoff in Elektro-Speicherheizgeräten Verwendung finden soll. In diesem Anwendungsbereich ist es besonders unerwünscht, daß dicke Isolierplatten den Platzbedarf des Speichergerätes erhöhen.

Es bestand deshalb die Aufgabe, eine faserfreie, wärmedämmende Verbundplatte anzugeben, deren Wärmedämmung auch bei verhältnismäßig geringer Plattendicke effektiv ist. Die Verbundplatte sollte ferner so gestaltet sein, daß der Materialbestandteil der Verbundplatte mit der höchsten Wärmedämmung, gegebenenfalls nach Abdeckung mit einem die Dicke der Verbundplatte nur unwesentlich erhöhenden anderen Stoff, auch zur Wärmequelle gerichtet werden kann.

Die Aufgabe wird durch eine faserfreie, wärmedämmende Verbundplatte, umfassend eine ein hochporöses anorganisches Material enthaltende Formplatte mit einer Seitenfläche, die mindestens eine Ausnehmung aufweist, in die eine faserfreie Dämmschicht, die im wesentlichen mikroporöses anorganisches Material enthält, eingebettet ist, dadurch gekennzeichnet, daß die Oberfläche der Dämmschicht beschichtet ist, wobei die Beschichtung aus einem anorganischen Film oder einer hitzebeständigen Folie besteht, gelöst.

Die beiden sich gegenüberliegenden Hauptseitenflächen der Verbundplatte unterscheiden sich dadurch, daß die Formplatte, deren Form im wesentlichen auch die Geometrie der Verbundplatte festlegt, auf einer Seitenfläche eine Ausnehmung aufweist. Vorzugsweise ist diese Ausnehmung als kassettenförmige Vertiefung ausgeführt. Im Bereich der Ausnehmung ist die Dicke der Formplatte um vorzugsweise 50 bis 95 %, besonders bevorzugt um 70 bis 90 % reduziert. Weiterhin ist vorgesehen, daß sich die Ausnehmung über einen Großteil der Seitenfläche der Formplatte, jedoch nicht bis zur Kante der Formplatte erstreckt. Die Ausnehmung kann durch Brücken oder Stege in zwei oder mehrere Kompartimente abgeteilt sein. Zum Erzielen einer möglichst effektiven Wärmedämmung ist jedoch eine einzige größflächige und tiefe Ausnehmung besonders bevorzugt.

In die Ausnehmung wird eine faserfreie Dämmschicht eingebettet, die im wesentlichen mikroporöses anorganisches Material enthält. Dies kann beispielsweise dadurch geschehen, daß ein vorgefertigter Formkörper formschlüssig in die Ausnehmung gelegt oder geklebt wird. Bevorzugt ist jedoch, die faserfreie Dämmschicht als verpreßbare Mischung in die Ausnehmung einzupressen und gegebenenfalls durch eine Temperaturbehandlung auszuhärten. Es ist zwar nicht zwingend vorgeschrieben, jedoch zweckmäßig, daß die faserfreie Dämmschicht den durch die Ausnehmung definierten Raum vollständig ausfüllt.

Die Seitenfläche der Formplatte, in der die Ausnehmung vorgesehen ist, bildet zusammen mit der aus der Ausnehmung zeigenden freien Oberfläche der Dämmschicht eine Seitenfläche der Verbundplatte, die bei der Verwendung der Verbundplatte als Wärmedämmstoff zur Wärmequelle gerichtet sein kann. Dies ist jedoch nicht zwingend notwendig. Die Verbundplatte weist auch hervorragende Wärmedämm-Eigenschaften auf, wenn diese Seitenfläche die von der Wärmequelle abgewandte Seitenfläche ist. Die Oberfläche der Dämmschicht ist zur Erhöhung der mechanischen Festigkeit mit einem dünnen anorganischen Film oder einer hitzebeständigen Folie beschichtet. Der Film wird vorzugsweise durch Versprühen oder Aufstreichen einer Mischung bestehend aus einem Bindemittel und einem feinteiligen Metalloxid und/oder einem Trübungsmittel erzeugt. Bei dem Bindemittel handelt es sich vorzugsweise um einen Stoff aus der Gruppe der aushärtenden Bindemittel, die noch im Zusammenhang mit der Herstellung der Formplatte beschrieben wird. Ebenso werden als feinteiliges Metalloxid und Trübungsmittel bevorzugt solche Stoffe eingesetzt, die noch im Zusammenhang mit der Herstellung der faserfreien Dämmschicht beschrieben werden.

Eine bevorzugte Form der Verbundplatte ist die Quadrat- oder Rechteckform. In dieser Form eignet sich die Verbundplatte besonders als Flächenelement von wärmedämmenden Gehäusen, die eine Wärmequelle umgeben. Wird die Verbundplatte als Flächenelement in einem wärmedämmenden Gehäuse, beispielsweise im Gehäuse eines elektrisch beheizten Wärmespeichergeräts eingesetzt, hat es sich als besonders günstig erwiesen, daß die Außenkanten der Formplatte, die sich an der zur Wärmequelle gerichteten Seitenfläche der Verbundplatte befinden, mit einem Profil versehen sind. Das Profil der Kanten wird zweckmäßig so gewählt, daß zwei benachbarte Flächenelemente des Gehäuses im Profilbereich formschlüssig überlappend aufeinander zu liegen kommen, wobei das Profil eine wirksame Sperre für durch Konvektion oder mittels eines Gebläses bewegte erhitze Luft bildet und Wärmeverluste verhindert. Die Sperrwirkung wird in einer bevorzugten Ausführungsform dadurch unterstützt, daß die von benachbarten Flächenelementen gebildete Fuge auf der von der Heizquelle abgewandten Außenseite des Gehäuses mit einem Dichtungsmittel auf Silikonbasis verfugt wird.

Zur Herstellung der Formplatte wird das hochporöse anorganische Material mit einem aushärtenden Binder vermischt und in an sich bekannter Weise gepreßt. Die bevorzugte Dichte der gepreßten Formplatte beträgt 200 bis 900 kg/m³, besonders bevorzugt 350 bis 550 kg/m³. Es ist von Vorteil, die Formplatte bereits mit der vorgesehenen Ausnehmung zu pressen.

Als hochporöses anorganisches Material wird geblähter Vermiculit besonders bevorzugt. Weniger bevorzugt, jedoch im Prinzip auch geeignet sind andere Vertreter aus der Gruppe der geblähten Schichtsilikate und hochporöses Vulkangestein, wie beispielsweise Perlit. Die Mischungen, die zur Formplatte verpreßt werden, haben folgende Zusammensetzungen:
60-99,9 Gew.-%, besonders bevorzugt 70-90 Gew.-% hochporöses anorganisches Material
0,1-40 Gew.-%, besonders bevorzugt 10-30 Gew.-% aushärtendes Bindemittel

Zu den aushärtenden Bindemitteln, die mit dem hochporösen anorganischen Material vor dem Verpressen vermischt werden, gehören wässerige Lösungen von Phosphaten wie Monoaluminiumphosphat, Silikophosphaten sowie Alkaliwassergläser und Kieselsol. Auch Mischungen der genannten Stoffe können als aushärtendes Bindemittel verwendet werden. Bevorzugt sind Natriumwasserglas, Kaliumwasserglas, Monoaluminiumphosphat, Silikophosphate und deren Mischungen.

Die Dichte der faserfreien Dämmschicht, die in die Ausnehmung der Formplatte eingebettet ist, beträgt vorzugsweise 100 bis 400 kg/m³, besonders bevorzugt 150 bis 280 kg/m³. Ferner weist die Dämmschicht folgende, bevorzugte Zusammensetzung auf:
30-100 Gew.-%, besonders bevorzugt 50-89 Gew.-% feinteiliges Metalloxid
0-50 Gew.-%, besonders bevorzugt 20-40 Gew.-% Trübungsmittel
0-20 Gew.-%, besonders bevorzugt 0-8 Gew.-% aushärtendes Bindemittel

Die eingesetzten feinteiligen Metalloxide weisen spezifische Oberflächen nach BET von vorzugsweise 50-700 m²/g, insbesondere 70-400 m²/g auf. Bevorzugt werden pyrogen erzeugte Kieselsäuren, einschließlich Lichtbogenkieselsäuren, alkaliarme Fällungskieselsäuren, Siliciumdioxidaerogele und Aluminiumoxide sowie Mischungen der genannten Stoffe verwendet. Besonders bevorzugt sind pyrogen erzeugte Kieselsäure oder Aluminiumoxid oder deren Mischungen.

Es ist von Vorteil, wenn das eingesetzte Trübungsmittel ein Absorptionsmaximum im Infrarotbereich zwischen 1,5 und 10 µm aufweist. Beispiele für geeignete Trübungsmittel sind Ilmenit, Titandioxid, Siliciumcarbid, Eisen(II)Eisen(III)Mischoxide, Chromdioxid, Zirkonoxid, Mangandioxid, Eisenoxid, Siliciumdioxid, Aluminiumoxid und Zirkonsilikat, sowie deren Mischungen. Besonders bevorzugt kommen Ilmenit, Titandioxid und Zirkonsilikat zur Anwendung. In einer weiteren bevorzugten Ausgestaltungsform wird das Trübungsmittel zunächst klassiert und nur in Korngrößen eingesetzt, bei denen die Wechselwirkung mit infraroter Wärmestrahlung auch in bezug auf die Korngröße gegeben ist.

Als aushärtendes Bindemittel, das gegebenenfalls Bestandteil der Dämmschicht sein kann, wird vorzugsweise ein Stoff oder Stoffgemisch aus der Gruppe der aushärtenden Bindemittel ausgewählt, die bereits als Komponenten zur Herstellung der Formplatte genannt sind und zur Auswahl stehen.

Die Herstellung der faserfreien Dämmschicht umfaßt in der bevorzugten Ausführungsform folgende Verfahrensschritte:
a) Einpressen der das feinteilige Metalloxid enthaltenden Mischung in die Ausnehmung der Formplatte unter einem spezifischen Preßdruck von vorzugsweise 3 bis 30 bar;
b) Gegebenenfalls eine Temperaturbehandlung der Verbundplatte bei Temperaturen von 50 bis 500 °C.

Wie bereits erwähnt, kann auch ein vorgefertigter Formkörper in die Ausnehmung der Formplatte eingelegt oder eingeklebt werden. In diesem Fall werden die benötigten Formkörper gemäß dem vorstehenden Verfahren gepreßt, wobei an die Stelle der Formplatte mit der Ausnehmung eine geeignete Preßform tritt. Dabei ist es allerdings unverzichtbar, die hergestellten Formkörper in einem weiteren Arbeitsgang mechanisch zu stabilisieren, da sie in diesem Zustand kaum in die Ausnehmung der Formplatte eingebettet werden können, ohne dabei beschädigt oder zerstört zu werden. Eine Möglichkeit der Stabilisierung besteht darin, die Oberfläche des Formkörpers mit einem dünnen anorganischen Film zu beschichten. Dies kann in analoger Weise zur bereits beschriebenen Beschichtung der aus der Ausnehmung zeigenden freien Oberfläche der Dämmschicht geschehen.

Mit dem Einbetten der Dämmschicht in der Ausnehmung der Formplatte erhält man bereits eine gebrauchsfertige Ausführungsform der wärmeisolierenden Verbundplatte. Die bevorzugte Dicke der Verbundplatte liegt im Bereich von 10 bis 50 mm, besonders bevorzugt 15 bis 35 mm. Eine derartige Verbundplatte besitzt ausgezeichnete Wärmedämmeigenschaften. Die Wärmeleitzahl einer 20 mm dicken Verbundplatte (mit 15 mm dicker faserfreier Dämmschicht) beträgt bei einer Messung dieses Parameters im Bereich der Dämmschicht und bei Raumtemperatur in Abhängigkeit der Zusammensetzung der faserfreien Dämmschicht vorzugsweise 0,019 bis 0,030 W/mK, besonders bevorzugt 0,022 bis 0,027 W/mK. Bei einer Temperatur von 180 °C liegt die Wärmeleitzahl vorzugsweise im Bereich von 0,025 bis 0,035 W/mK, besonders bevorzugt 0,027 bis 0,032 W/mK.

Gemäß der Erfindung wird mindestens die mit der Ausnehmung versehene Seitenfläche der Verbundplatte teilweise oder vollständig mit einer hitzebeständigen Folie, deren Dicke vorzugsweise 10 bis 1000 µm, besonders bevorzugt 20 bis 600 µm beträgt, kaschiert. Diese Maßnahme dient vor allem dem Schutz der Dämmschicht vor Verschmutzung, mechanischer Beanspruchung und vor Beschädigung während des Transports, der Installation und des Einsatzes der Verbundplatte. Zum Kaschieren der Verbundplatte werden dünne Metallfolien, vorzugsweise aus Aluminium, Kupfer oder Edelstahl, oder anorganische Folien, vorzugsweise Glimmerfolien verwendet.

Die erfindungsgemäße Verbundplatte wird vorzugsweise als Hochtemperatur-Wärmedämmstoff bis zu Temperaturen von 1000 °C verwendet. Sie eignet sich beispielsweise zur Wärmeisolierung von Hochtemperatur-Brennstoffzellen und Hochtemperatur-Batterien. Besonders bevorzugt ist der Einsatz als wärmedämmende Platte in elektrisch beheizten Wärmespeichergeräten. Der besondere Vorteil der Verbundplatte ist, daß sie vollständig faserfrei ist und bei verhältnismäßig geringer Plattendicke ausgezeichnete Wärmedämmeigenschaften aufweist.

Im folgenden werden an einem Beispiel die Herstellung und die Eigenschaften einer erfindungsgemäßen Verbundplatte demonstriert:

### Beispiel

Eine homogene Mischung aus 80 Gew.-% geblähtem Vermiculit mit einem Teilchendurchmesser von 0,2-8 mm und 20 Gew.-% Natriumwasserglas wurde bei axialer Druckaufgabe zu einer rechteckigen Formplatte (Länge 750 mm, Breite 450 mm) mit einer kassettenförmigen Ausnehmung (Länge 710 mm, Breite 410 mm) gepreßt und bei Raumtemperatur zum Aushärten gebracht. Die Dichte der fertiggestellten Formplatte betrug 430 kg/m³. Im Bereich der Ausnehmung war die Dicke der Formplatte von 20 mm auf 5 mm reduziert. In die Ausnehmung wurde eine Mischung von 67 Gew.-% pyrogen erzeugter Kieselsäure und 33 Gew.-% Titandioxid zu einer wärmeisolierenden Dämmschicht mit einer Dichte von 180 kg/m³ gepreßt. Nach Herstellerangaben lag die Korngröße des verwendeten Titandioxids zu mindestens 90 Gew.-% im Bereich von 1 bis 10 µm. Auf die Oberfläche der Dämmschicht wurde eine 20 µm dicke Folie aus Aluminium mit Hilfe von Wasserglas aufgeklebt. Die Untersuchung der Wärmedämmeigenschaften der so hergestellten Verbundplatte ergab Wärmeleitzahlen von 0,024 W/mK bei Raumtemperatur und von 0,029 W/mK bei 180 °C.

## Patentansprüche

1. Faserfreie, wärmedämmende Verbundplatte, umfassend eine ein hochporöses anorganisches Material enthaltende Formplatte mit einer Seitenfläche, die mindestens eine Ausnehmung aufweist, in die eine faserfreie Dämmschicht, die im wesentlichen mikroporöses anorganisches Material enthält, eingebettet ist, dadurch gekennzeichnet, daß die Oberfläche der Dämmschicht beschichtet ist, wobei die Beschichtung aus einem anorganischen Film oder einer hitzebeständigen Folie besteht.

2. Verbundplatte nach Anspruch 1, dadurch gekennzeichnet, daß die Dämmschicht den durch die Ausnehmung definierten Raum vollständig ausfüllt.

3. Verbundplatte nach einem der Ansprüche 1 oder 2, dadurch gekennzeichnet, daß die Außenkanten der Formplatte, die sich an der vorzugsweise zur Wärmequelle gerichteten Seitenfläche der Verbundplatte befinden, mit einem Profil versehen sind.

4. Verbundplatte nach einem der Ansprüche 1 bis 3, dadurch gekennzeichnet, daß das hochporöse anorganische Material aus der Gruppe der geblähten Schichtsilikate oder der Gruppe der hochporösen Vulkangesteine ausgewählt ist.

5. Verbundplatte nach Anspruch 4, dadurch gekennzeichnet, daß das hochporöse anorganische Material geblähter Vermiculit ist.

6. Verbundplatte nach einem der Ansprüche 1 bis 5, dadurch gekennzeichnet, daß die faserfreie mikroporöse Dämmschicht im wesentlichen aus feinteiligem Metalloxid besteht und gegebenenfalls Trübungsmittel und/oder aushärtendes Bindemittel enthält.

7. Verwendung der Verbundplatte gemäß einem der Ansprüche 1 bis 6 als Hochtemperatur-Wärmedämmstoff.

8. Verwendung der Verbundplatte gemäß Anspruch 7 in Geräten zur Wärmespeicherung.

9. Verwendung der Verbundplatte gemäß Anspruch 7 in Hochtemperatur-Brennstoffzellen und -Batterien.

## Claims

1. Fibre-free, thermally insulating composite sheet encompassing a moulded sheet comprising a highly porous inorganic material and having a face side which has at least one recess into which has been embedded a fibre-free insulating layer which essentially comprises microporous inorganic material, characterized in that the surface of the insulating layer has been coated, where the coating is composed of an inorganic film or of a heat-resistant foil.

2. Composite sheet according to Claim 1, characterized in that the insulating layer completely fills the space defined by the recess.

3. Composite sheet according to one of Claims 1 or 2, characterized in that the outer edges of the moulded sheet which are located on that face side of the composite sheet which preferably faces towards the heat source have been provided with a profiled shape.

4. Composite sheet according to one of Claims 1 to 3, characterized in that the highly porous inorganic material has been selected from the class consisting of expanded phyllosilicates or from the class consisting of highly porous volcanic rocks.

5. Composite sheet according to Claim 4, characterized in that the highly porous inorganic material is expanded vermiculite.

6. Composite sheet according to one of Claims 1 to 5, characterized in that the fibre-free microporous insulating layer essentially consists of finely divided metal oxide and, if desired, comprises opacifiers and/or a curable binder.

7. Use of the composite sheet according to one of Claims 1 to 6 as a high-temperature thermal insulation material.

8. Use of the composite sheet according to Claim 7 in devices for heat storage.

9. Use of the composite sheet according to Claim 7 in high-temperature fuel cells and in high-temperature batteries.

## Revendications

1. Panneau composite sans fibre et calorifuge, comprenant une plaque contenant un matériau inorganique très poreux, dont une face latérale présente au moins un creux dans lequel est encastrée une couche isolante sans fibre qui contient essentiellement un matériau inorganique microporeux, caractérisé en ce que la surface de la couche isolante est revêtue, lequel revêtement étant constitué d'un film inorganique ou d'une feuille résistant à la chaleur.

2. Panneau composite suivant la revendication 1, caractérisé en ce que la couche isolante remplit entièrement l'espace défini par le creux.

3. Panneau composite suivant l'une quelconque des revendications 1 ou 2, caractérisé en ce que les bords extérieurs de la plaque qui se trouvent sur la face latérale du panneau composite, dirigée de Préférence vers la source de chaleur, sont munis d'un profil.

4. Panneau composite suivant l'une quelconque des revendications 1 à 3, caractérisé en ce que le matériau inorganique très poreux est sélectionné parmi le groupe des silicates de couche expansés ou le groupe des roches volcaniques très poreuses.

5. Panneau composite suivant la revendication 4, caractérisé en ce que le matériau inorganique très poreux est de la vermiculite expansée.

6. Panneau composite suivant l'une quelconque des revendications 1 à 5, caractérisé en ce que la couche isolante sans fibre microporeuse est essentiellement constituée d'oxyde métallique finement divisé et contient le cas échéant un opacifiant et/ou un liant durcissant.

7. Utilisation du panneau composite suivant l'une quelconque des revendications 1 à 6, comme matériau calorifuge à haute température.

8. Utilisation du panneau composite suivant la revendication 7, dans des installations de chauffage par accumulation.

9. Utilisation du panneau composite suivant la revendication 7, dans des cellules et dans des piles combustibles à haute température.
